# EUROPÄISCHE PATENTANMELDUNG

(11) **EP 4 607 242 A1**
(43) Veröffentlichungstag der Anmeldung: **27.08.2025**
(21) Anmeldenummer: 24159159.3
(22) Anmeldetag: 22.02.2024
(51) Int. Cl.: G01S 13/88, G01S 13/46

(54) **VERFAHREN UND SYSTEM ZUM ERKENNEN EINER STRUKTURELLEN ÄNDERUNG IN EINEM GESCHLOSSENEN BAUTEIL-RAUM**

(71) Anmelder: Siemens AG Österreich, 1210 Wien (AT)
(72) Erfinder: Die Erfindernennung liegt noch nicht vor
(74) Vertreter: Siemens Patent Attorneys

(57) **Zusammenfassung**

Verfahren zum Erkennen einer strukturellen Änderung in einem geschlossenen Bauteil-Raum (SS), innenliegend umfassend zumindest einen Sender (TX) zum Senden eines Sende-Signals, zumindest einen steuerbaren Reflektor (RIS) zum Reflektieren von Signalen in zumindest eine konfigurierbare Reflexions-Richtung, zumindest einen Empfänger (RX) zum Empfangen der reflektierten Signale, und zumindest ein erstes Bauteil zum Reflektieren des Sende-Signals und/oder des reflektierten Signals während einer ersten Zustandsbestimmung, und zumindest ein zweites Bauteil zum Reflektieren des Sende-Signals und/oder des reflektierten Signals während einer zweiten Zustandsbestimmung, wobei folgende Schritte ausgeführt werden:
- Bestimmen eines ersten Zustands des Bauteil-Raums (SS), bei welchem nur das zumindest eine erste Bauteil im Bauteil-Raum (SS) angeordnet so ist, durch Senden eines Sende-Signals, Anwenden zumindest einer vorbestimmten Reflexions-Richtung durch den Reflektor (RIS), Reflektieren des Sende-Signals und/oder das reflektierte Signal und Empfangen der reflektierten Signale, und
- Bestimmen eines zweiten Zustands des Bauteil-Raums (SS), bei welchem das zumindest eine erste Bauteil und das zumindest eine zweite Bauteil im Bauteil-Raum (SS) angeordnet sind, durch Senden des Sende-Signals, Anwenden der zumindest einen vorbestimmten Reflexions-Richtung durch den Reflektor (RIS), Reflektieren des Sende-Signals und/oder des reflektierten Signals und Empfangen der reflektierten Signale, und
- Bestimmen einer strukturelle Änderung im Bauteil-Raum (SS) aus dem Unterschied zwischen dem ersten und dem zweiten Zustand.

## Beschreibung

Die Erfindung betrifft ein Verfahren und ein System zum Erkennen einer strukturellen Änderung in einem geschlossenen Bauteil-Raum.

In industriellen Anwendungen ist es häufig erforderlich, mechanische Veränderungen in einem Volumenbereich zu detektieren, wie einem Geräteschrank oder einem Gehäuse, wobei die Veränderungen beispielsweise in der Anordnung von elektronischen Bauteilen, elektrischen Baugruppen, Geräten, Verbindungselementen oder Montageelementen im zu beobachtenden Volumen gebildet sein können.

Veränderungen im Schaltschrank können beispielsweise auch durch den Austausch oder Erweiterung von Komponenten, sowie dem Umbau von Bauelementen oder Geräten, eine veränderte Kabelführung, mechanische Beschädigungen oder auch vergessenes Werkzeug gebildet sein, sowie auch durch Sabotage-Handlungen begründet sein.

Bei Elektronik-Baugruppen können Veränderungen beispielsweise an Bonddrähten in Leistungsmodulen oder ein Austausch oder eine Manipulation von Microchips erkannt werden, beispielsweise wenn ein Draht beschädigt wird und dadurch zwei Draht-Teile gebildet werden, welche nicht mehr miteinander verbunden sind.

Im Stand der Technik wird eine manuelle Inspektion in der Regel vor Ort durchgeführt, um derartige Veränderungen festzustellen.

Es ist Aufgabe der Erfindung eine Lösung bereitzustellen, bei welcher auf einfache und zuverlässige Weise automatisch Veränderungen in einem Bauteil-Raum erkannt werden können.

Die erfindungsgemäße Aufgabe wird durch ein Verfahren zum Erkennen einer strukturellen Änderung in einem geschlossenen Bauteil-Raum gelöst, innenliegend umfassend zumindest einen Sender zum Senden eines Sende-Signals, zumindest einen steuerbaren Reflektor zum Empfangen von reflektierten Signalen und zum Reflektieren des Sende-Signals in zumindest eine konfigurierbare Reflexions-Richtung, zumindest einen Empfänger zum Empfangen der reflektierten Signale, und zumindest ein erstes Bauteil zum Reflektieren des Sende-Signals und/oder des reflektierten Signals während einer ersten Zustandsbestimmung, und zumindest ein zweites Bauteil zum Reflektieren des Sende-Signals und/oder des reflektierten Signals während einer zweiten Zustandsbestimmung, wobei folgende Schritte ausgeführt werden:
- Bestimmen eines ersten Zustands des Bauteil-Raums, bei welchem nur das zumindest eine erste Bauteil im Bauteil-Raum angeordnet so ist, durch Senden eines Sende-Signals, Anwenden zumindest einer vorbestimmten Reflexions-Richtung im Reflektor, Reflektieren des Sende-Signals und/oder das reflektierte Signal und Empfangen der reflektierten Signale, und
- Bestimmen eines zweiten Zustands des Bauteil-Raums, bei welchem das zumindest eine erste Bauteil und das zumindest eine zweite Bauteil im Bauteil-Raum angeordnet sind, durch Senden des Sende-Signals, Anwenden der zumindest einen vorbestimmten Reflexions-Richtung im Reflektor, Reflektieren des Sende-Signals und/oder des reflektierten Signals und Empfangen der reflektierten Signale, und
- Bestimmen der strukturellen Änderung im Bauteil-Raum aus dem Unterschied zwischen dem ersten und dem zweiten Zustand.

Erfindungsgemäß erfolgt die Erkennung von Veränderungen im Schaltschrank durch regelmäßiges Testen des zu beobachtenden Volumens auf seine Hochfrequenzeigenschaften, wie Reflexionen oder dielektrische Eigenschaften des Mediums und der Komponenten im Volumen, vorzugsweise mittels Millimeter-Wellen.

Es werden zunächst die Eigenschaften eines reflektierten Sende-Signals für eine Referenz-Konfiguration gemessen und gespeichert.

Eine nachfolgende Kontroll-Messung kann feststellen, ob Abweichungen von der Referenz-Konfiguration, also geänderte Eigenschaften des reflektierten Sende-Signals vorliegen und dementsprechend eine strukturelle Änderung im Bauteil-Raum vorliegt und beispielsweise eine Warnung erzeugt wird.

Unter dem geschlossenen Bauteil-Raum wird ein umschlossenes Volumen verstanden, welches beispielsweise durch Wände, einen Deckel und einen Boden begrenzt ist, um vorzugsweise die so umschlossenen Bauteile von äußeren Einflüssen zu schützen, beispielsweise durch eine Ausführung mit einem elektrisch leitfähigen Material.

Daher ist es günstig, wenn der Schaltschrank eine vollständige metallische Hülle aufweist, um eine gute Barriere für Einflüsse von außen zu bilden

Die erfindungsgemäße Lösung bietet viele Vorteile, beispielsweise kann ein einfaches und kostengünstiges, auch integrierten Radarsystems zur detaillierten Bewertung der Reflexionseigenschaften in einem vorgegebenen Volumen verwendet werden.

Ferner kann durch Verwendung eines steuerbaren Reflektors das zu beobachtete Volumen um ein Vielfaches größer sein, als wenn ein reines Sender-/empfänger-System verwendet wird, wodurch auch die Genauigkeit verbessert werden kann.

Außerdem kann bei Verwendung eines aktiven steuerbaren Reflektors durch verstärkende Elemente durch den Reflektor die Sendeleistung des Radarsystems sehr viel gering sein, was die Systemkomplexität und die Kosten reduziert.

Auch können Messungen zu regelmäßigen Zeitpunkten wiederholt erhoben und ausgewertet werden, wodurch aufeinanderfolgende Veränderungen getrennt voneinander detektierbar sind und eine fortlaufende Überwachung und Nachverfolgung von Veränderungen zu einer Ursachenfindung eines vorliegenden Fehlers oder einer Analyse einer Systemänderung möglich ist.

Die Detektion eines Rückbaus auf einen Originalzustand des Schaltschranks SS samt der installierten Komponenten G1-G4, KK1-KK3, HS1-HS3, K1, K2 kann dadurch ebenfalls unterstützt werden.

So ist es im Falle von Schaltschränken denkbar, dass eine Veränderung der Lage von Kupferdrähten in einem Kunststoff-Kabelkanal detektierbar ist, wodurch ein Austausch eines Gerätes gegen eine sonst mechanisch idente Fälschung könnte daher aufgrund der nach dem Austausch etwas anders liegenden Leitungen detektiert werden.

Bei Elektronik-Flachbaugruppen haben HF-Reflektometrie Messungen zum Beispiel ergeben, dass ein umgebogener Bonddraht, Volumenänderungen im Lot und Drehungen und Verschiebungen einzelner Bauteiledetektiert werden können.

Zusätzlich liegt der Vorteil vor, dass vom System keine Bilddaten erfasst werden, was ein Datenschutz-Vorteil gegenüber Kamera-Systemen ist.

Ferner wird im Gegensatz zu einem "alarmanlagen-ähnlichen" Zugriffsschutz-Systemen nicht nur beim Zeitpunkt des Zugriffs ein Alarm ausgelöst, sondern darüber hinaus auch eine Veränderung am bestehen System angezeigt, wodurch sich eine höhere Sicherheitsstufe ergeben kann.

Das Verfahren kann weiterentwickelt werden, indem eine Klassifizierung der empfangenen Signale in einer nachfolgenden Analyse beispielweise durch Anwendung von Verfahren basierend auf künstliche Intelligenz erfolgt, und ein entsprechendes "machine learning"-Modell erzeugt und angewendet wird.

Dabei kann das Bestimmen des ersten Zustands des Bauteil-Raums durch ein Modell-Training erfolgen, und die Zustands-Erkennung beziehungsweise Inferenz durch Bestimmen des zweiten Zustands des Bauteil-Raums erfolgen.

In einer Weiterbildung der Erfindung ist es vorgesehen, dass die zumindest eine konfigurierbare Richtung des Reflektors zumindest drei, bevorzugt fünf, besonders bevorzugt zehn Richtungen aufweist, welche während der Zustandsbestimmungen des Bauteil-Raums zeitlich sequenziell durch den Reflektor konfiguriert werden.

Dadurch kann die Genauigkeit des Verfahrens weiter gesteigert werden.

Es können beispielsweise Richtungen definiert werden, in welchen besonders signifikante Reflexionen oder Absorptionen oder auch Dispersionen erfolgen, welche eine gute Klassifizierung der empfangenen Signale in einer nachfolgenden Analyse, beispielweise mithilfe einer künstlichen Intelligenz, erlauben.

Die Aufgabe wir auch durch ein System zum Erkennen einer strukturellen Änderung in einem geschlossenen Bauteil-Raum gelöst, umfassend
- zumindest einen Sender, welcher innerhalb des Bauteil-Raums angeordnet ist und dazu eingerichtet ist, ein Sende-Signal zu senden, und
- einen steuerbaren Reflektor, welcher innerhalb des Bauteil-Raums angeordnet ist und dazu eingerichtet ist, das Sende-Signal zu empfangen und in zumindest eine konfigurierbare Richtung zu reflektieren, und
- zumindest ein erstes Bauteil, welches innerhalb des Bauteil-Raums so angeordnet ist, dass das Sende-Signal und/oder das reflektierte Signal daran reflektiert wird, und
- zumindest einen Empfänger, welcher innerhalb des Bauteil-Raums angeordnet ist und dazu eingerichtet ist, die reflektierten Signale zu empfangen,
   und das System ferner dazu eingerichtet ist,
- einen ersten Zustand des Bauteil-Raums, bei welchem nur das zumindest eine erste Bauteil im Bauteil-Raum angeordnet ist, durch Senden des Sende-Signals, Anwenden zumindest einer vorbestimmten Reflexions-Richtung durch den Reflektor und Empfangen der reflektierten Signale, zu bestimmen, und
- einen zweiten Zustand des Bauteil-Raums, bei welchem das zumindest eine erste Bauteil und das zumindest ein zweites Bauteil im Bauteil-Raum so angeordnet sind, um das Sende-Signal und/oder das reflektierte Signal zu reflektieren, durch Senden des Sende-Signals, Anwenden der zumindest einen vorbestimmten Richtung durch den Reflektor und Empfangen der reflektierten Signale zu bestimmen, und
- aus dem Unterschied zwischen dem ersten und dem zweiten Zustand eine strukturelle Änderung im Bauteil-Raum zu bestimmen.

In einer Weiterbildung der Erfindung ist es vorgesehen, dass das zumindest eine zweite Bauteil durch jeweils ein abgetrenntes Teil des zumindest einen ersten Bauteil gebildet ist.

Dadurch kann beispielsweise ein im Betrieb gebrochener, durchtrennter oder durchgebrannter Draht, welcher ursprünglich zwei Bauteile miteinander verbunden hat, mit zwei verbleibenden Draht-Teilen beziehungsweise Draht-Enden erkannt werden.

In einer Weiterbildung der Erfindung ist es vorgesehen, dass das zumindest eine zweite Bauteil ein mechanisches oder elektrisches oder elektronisches Werkzeug umfasst
Dadurch kann beispielsweise ein Werkzeug, welches bei einer Wartung im Schaltschank unabsichtlich zurückgelassen wurde, erkannt werden.

In einer Weiterbildung der Erfindung ist es vorgesehen, dass der Bauteil-Raum ein Schaltschrank ist, und das zumindest eine erste Bauteil ein elektronisches Gerät und/oder ein elektrisches Kabel umfasst.

Die Überwachung eines elektrischen Schaltschrankes mit Bauteilen, Geräten, Montage-Teile oder Kabel ist zur Anwendung der Erfindung besonders gut geeignet.

In einer Weiterbildung der Erfindung ist es vorgesehen, dass der Bauteil-Raum eine elektronische Baugruppe ist, und das zumindest eine erste Bauteil ein elektronisches Halbleiter-Bauteil umfasst.

Die Überwachung einer elektrischen Baugruppe mit Bauteilen, Geräten, Montage-Teile oder Kabel ist zur Anwendung der Erfindung besonders gut geeignet.

In einer Weiterbildung der Erfindung ist es vorgesehen, dass die zumindest eine konfigurierbare Richtung zumindest drei, bevorzugt fünf, besonders bevorzugt zehn Richtungen aufweist, und welche während der Zustandsbestimmungen des Bauteil-Raums zeitlich sequenziell durch den Reflektor konfigurierbar sind.

Es können beispielsweise Richtungen definiert werden, in welchen besonders signifikante Reflexionen oder Absorptionen oder auch Dispersionen erfolgen, welche eine gute Klassifizierung der empfangenen Signale in einer nachfolgenden Analyse, beispielweise mithilfe einer künstlichen Intelligenz, erlauben.

Diese Richtungen können zeitlich versetzt eingestellt werden, um die System-Komplexität einfach zu halten und einen einfachen steuerbaren Reflektor zu verwenden.

In einer Weiterbildung der Erfindung ist es vorgesehen, dass der Bauteil-Raum zumindest teilweise aus einem elektrisch leitfähigen Material gebildet ist, bevorzugt zu mehr als 50%, besonders bevorzugt zu mehr als 75%, jeweils der innenliegenden Oberfläche des Bauteil-Raums.

Dadurch können die Reflexionen besonders zielgerichtet werden, indem die Reflexionen an vorbestimmte elektrisch leitfähige Stellen oder Flächen gerichtet werden, in welchen besonders signifikante Reflexionen oder Absorptionen oder auch Dispersionen erfolgen, welche eine gute Klassifizierung der empfangenen Signale in einer nachfolgenden Analyse, beispielweise mithilfe einer künstlichen Intelligenz, erlauben.

Die Erfindung wird anhand von Ausführungsbeispielen in den nachfolgenden Figuren näher beschrieben. Die Figuren zeigen in
- Fig. 1: ein ersten Ausführungsbeispiel der Erfindung für einen Schaltschrank in einer Querschnittsdarstellung,
- Fig. 2: ein zweites Ausführungsbeispiel der Erfindung für eine Flachbaugruppe in einer Querschnittsdarstellung.

Es ist klar, dass zur Steuerung im System entsprechende Steuerungen der gezeigten Module oder Verbindungen erforderlich sind. Zu besseren Übersicht sind diese Elemente in den Figuren nicht dargestellt.

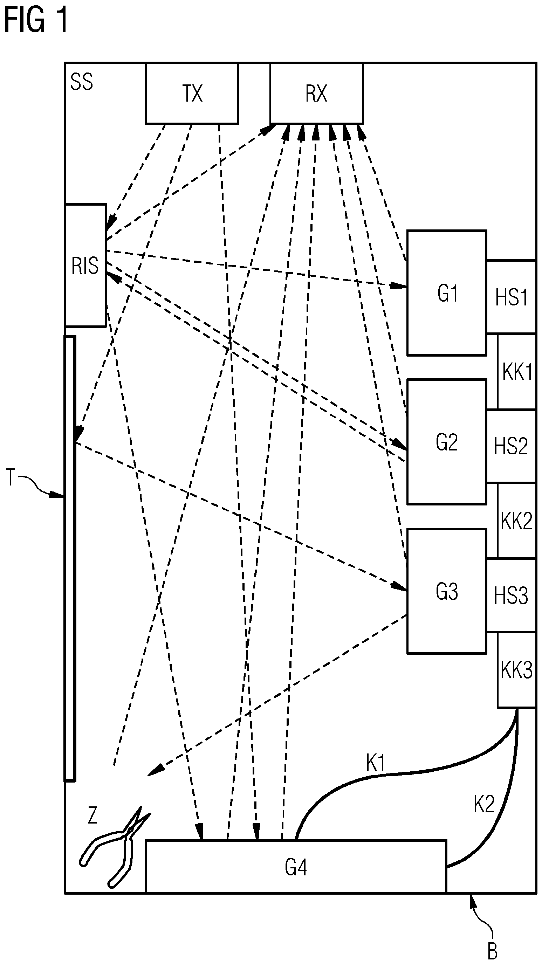

Fig. 1 zeigt ein ersten Ausführungsbeispiel der Erfindung mit einem Bauteil-Raum in Form eines Schaltschranks SS.

Als Bauteile sind elektronische Geräte G1-G4 umfasst, welche an Hutschienen HS1-HS3, also DIN-Schienen, beziehungsweise am Boden B des Schaltschranks SS montiert sind.

Die Geräte sind mit Leitungen oder Kabeln K1, K2 verbunden, welche teilweile in Kabelkanälen KK1-KK3 verlegt sind.

Der Schaltschrank weist eine metallische, also elektrisch leitfähige Tür T auf, durch welche bei einer Wartung Zugang zu den Bauteilen erfolgt.

Ferner ist im Schaltschrank SS am Boden B ein bei einer Wartung unbeabsichtigt zurückgelassenes Werkzeug in Form einer Zange Z in der Figur eingezeichnet, welche erkannt werden soll.

Ferner ist die Rückwand des Schaltschranks aus einer elektrisch leitfähigen Metallplatte gebildet, auf welcher die Bauteile montiert sind.

Somit weist der Schaltschrank zu mehr als 75% eine elektrisch leitfähige innenliegende Oberfläche des Bauteil-Raums SS auf.

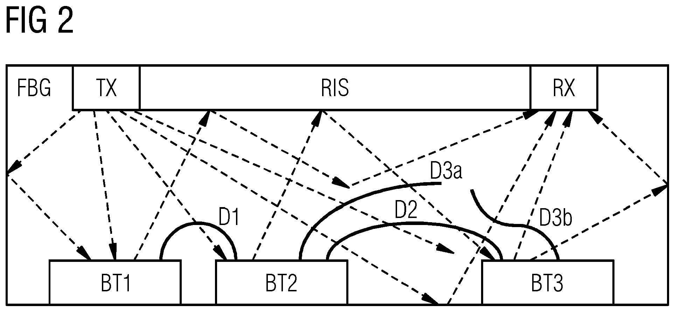

**Fig. 2** zeigt ein zweites Ausführungsbeispiel der Erfindung mit einem Bauteil-Raum in Form einer Flachbaugruppe FBG.

Der Bauteil-Raum FBG ist hier eine elektronische Baugruppe in flacher Bauform und mit einem metallischen Deckel, welche Baugruppe erste Bauteile in Form von ein elektronischen Halbleiter-Bauteilen BT1-BT3 umfasst.

Die Halbleiter-Bauteile BT1-BT3 sind mit Bond-Drähten D1, D2 verbunden.

Ferner sind zwei im Betrieb gebrochene Draht-Enden D3a und D3b zwischen den Halbleiter-Bauteilen BT2 und BT3 in der Figur eingezeichnet, welche erkannt werden sollen.

Ansonsten sind die Ausführungsbeispiele der Figuren analog zu verstehen und die weiteren Ausführungen gelten mutatis mutandis.

Das System zum Erkennen einer strukturellen Änderung in einem geschlossenen Bauteil-Raum FBG umfasst einen Sender TX, welcher innerhalb des Bauteil-Raums FBG angeordnet ist und dazu eingerichtet ist, ein Sende-Signal zu senden.

Der Sender TX weist eine Sende-Elektronik auf und eine Sende-Antenne. Es ist grundsätzlich nur erforderlich, dass die Sende-Antenne innerhalb des Schaltschranks angeordnet ist, jedoch aufgrund der Einfachheit ist der Sender TX ein kompaktes integriertes Sende-Modul mit Elektronik und Antenne.

Ferner weist das System einen steuerbaren Reflektor RIS auf, welcher innerhalb des Bauteil-Raums SS, FBG angeordnet ist und dazu eingerichtet ist, das Sende-Signal zu empfangen und in mehrere, konfigurierbare Richtungen zu reflektieren.

Die konfigurierbaren Richtungen weisen beispielsweise zehn Richtungen auf, welche während der Zustandsbestimmungen des Bauteil-Raums SS, FBG zeitlich sequenziell durch den Reflektor RIS konfigurierbar sind, und die beispielsweise auf metallische Teile des Schaltschranks gerichtet sind.

Außerdem weist das System mehrere Bauteile auf, welche innerhalb des Bauteil-Raums SS, FBG so angeordnet ist, dass das Sende-Signal und/oder das reflektierte Signal daran reflektiert wird.

Erste Bauteile sind Baugruppen und elektrische und mechanische Verbindungselemente, die im Schaltschrank angeordnet und montiert sind.

Ein zweites Bauteil kann ein bei einer Wartung unbeabsichtigt zurückgelassenes Werkzeug sein.

Ferner weist das System einen Empfänger RX auf, welcher innerhalb des Bauteil-Raums SS, FBG angeordnet ist und dazu eingerichtet ist, die reflektierten Signale zu empfangen,

Der Empfänger RX weist analog zum Sender TX eine Empfangs-Elektronik und eine EmpfangsAntenne auf, hier als kompaktes integriertes Empfangs-Modul mit Elektronik und Antenne.

Die gesendeten, die reflektierten und die Signale zum Empfangen sind in den Figuren strichliert eingezeichnet, wobei direkte Signalpfade zwischen Sender und Empfänger, aber auch Mehrwege-Pfade über den steuerbaren Reflektor RIS oder auch über Bauteile oder Geräte G1-G4, Kabel K1, K2, oder auch die Zange Z oder Wände oder die Tür T des Schaltschranks SS erkennbar sind.

Das System ist ferner dazu eingerichtet, folgende Verfahrensschritte auszuführen:
Zunächst, Bestimmen eines ersten Zustands des Bauteil-Raums SS, FBG, bei welchem nur die ersten Bauteile im Bauteil-Raum SS, FBG angeordnet ist, durch Senden des Sende-Signals, Anwenden der vorbestimmten Reflexions-Richtungen durch den Reflektor RIS und Empfangen der entsprechenden reflektierten Signale.

Dann, Bestimmen eines zweiten Zustands des Bauteil-Raums SS, FBG, bei welchem die ersten Bauteile und das zweite Bauteil im Bauteil-Raum SS, FBG so angeordnet sind, um das Sende-

Signal und/oder das reflektierte Signal zu reflektieren, durch Senden des Sende-Signals, Anwenden der vorbestimmten Richtungen durch den Reflektor RIS und Empfangen der reflektierten Signale.

Nachfolgend, Bestimmen der strukturellen Änderung im Bauteil-Raum SS, FBG aus dem Unterschied zwischen dem ersten und dem zweiten Zustand.

Mit anderen Worten erlaubt das Radarsystem die Beurteilung der Reflexionseigenschaften eines von der Sende-Antenne beleuchteten Raumes.

Das üblicherweise breitbandige Sende-Signal trifft auf reflektierende Objekte, beispielsweise von leitfähiger oder dielektrischer Natur, und wird von diesen Objekten reflektiert.

Es werden zeitlich versetzt mehrere Sende-Signals ausgestrahlt, reflektiert und anschließen empfangen.

Teile dieser reflektierten Signale treffen wiederum auf die Empfangs-Antenne, und werden anschließend bewertet, insbesondere über das gesamte Frequenz-Spektrum des EmpfangsSignals, wodurch sich der Abstand und die Reflexionseigenschaften von reflektierenden Objekten im Raum effizient bestimmen lassen.

Ein System mit einer einzigen Antenne, beziehungsweise mit einer Sendeantenne und einer zusätzlichen Empfangsantenne weist geringe Kosten und eine niedrige Komplexität auf, was jedoch zu einer mangelnden Ortsauflösung von detektierten Objekten führen kann.

Bei zwei Antennen, also getrennten Sender TX und Empfänger RX, kann die Position nicht eindeutig bestimmt werden und Veränderungen innerhalb des vom Sender TX beleuchteten Bereiches können lediglich grob erkannt werden, das die Datenbasis einer solchen Messung gering ist und die Erkennung daher unzuverlässig sein kann.

Es können aber auch Systeme mit mehreren Sendern- und Empfängern (in den Figuren nicht gezeigt), beispielsweise mit hochintegrierten Microchips, beziehungsweise entsprechenden Antennen verwendet werden, um eine hohe Detektionsgenauigkeit zu erhalten.

Die Reflexions-Eigenschaften des zu betrachtenden Raumbereiches und somit die Transmission zwischen Sender TX und Empfänger RX können gezielt durch den veränderbaren Reflektor RIS verändert werden.

Der Sender TX kann beispielsweise auf den Reflektor RIS gerichtet werden, um die Verteilung der Sendeleistung im Raum zu steuern und der Raum in Winkelbereiche zerlegt werden kann, welche sequenziell beleuchtet und genau analysiert werden können, indem eine statistische Auswertung der Daten auf Veränderung durchgeführt wird.

Der steuerbare Reflektor RIS soll einen möglichst deutlichen Einfluss auf das Strahlungsfeld nehmen und soll daher an einer Stelle positioniert werden, in dem ihre Reflexionsänderungen hohe Wirkung auf das Strahlungsfeld im Raum haben.

Die Ausrichtung der Antennen von Sender TX und Empfänger RX auf eine oder mehrere steuerbare Reflektoren RIS ist dabei eine naheliegende Option, wobei für manche Anwendung es aber auch sinnvoll sein kann, den steuerbaren Reflektor RIS nicht direkt zu beleuchten.

Beispielsweise kann bei der Bewertung von Flachbaugruppen die RIS neben den entsprechenden Antennen in einen Gehäusedeckel, vorzugsweise aus elektrisch leitfähigem Material, eingebaut werden, so dass sowohl Antennen als auch der steuerbare Reflektor RIS der Flachbaugruppe zugewandt sind.

Wichtig ist, dass die Eigenschaften des beobachteten Raumes einen starken Effekt auf die Transmission zwischen Sende- und Empfangs-Signal haben und der steuerbare Reflektor RIS diese Transmission möglichst stark beeinflussen kann.

Es ist vorteilhaft, dass das Strahlungsfeld währen der Messungen im beobachteten Volumen nicht von äußeren Einflüssen abhängig ist.

Daher ist es günstig, wenn der Schaltschrank eine vollständige metallische Hülle aufweist, um eine gute Barriere für Einflüsse von außen zu bilden, was häufig wegen Anforderungen an die elektromagnetische Verträglichkeit an den Schaltschrank gegeben sein kann, wobei optional zusätzlich Hochfrequenz-Dichtungen im Türbereich eingesetzt werden können.

Bei Elektronikbaugruppen ist die Abschirmung häufig nicht so wichtig, da der beobachtete Raum eher klein ist, und Reflexionen außerhalb des Bereiches mit hohen Dämpfungen im Vergleich zum Innenbereich beaufschlagt sind.

*Unabhängig vom grammatikalischen Geschlecht eines bestimmten Begriffes sind Personen mit männlicher, weiblicher oder anderer Geschlechteridentität mit umfasst.*

### Bezugszeichenliste:

- B: Schaltschrank-Boden
- BT1-BT1: Bauteil
- D1, D2: Bond-Draht, ganz
- D3a, D3b: Bond-Draht, gebrochen
- FBG: Flachbaugruppe
- G1-G4: Gerät
- HS1-HS3: Hutschiene, DIN-Schiene
- K1, K2: Kabel
- KK1-KK3: Kabelkanal
- RIS: steuerbarer Reflektor
- RX: Empfänger
- SS: Schaltschrank
- TX: Sender
- Z: Zange

## Patentansprüche

1. Verfahren zum Erkennen einer strukturellen Änderung in einem geschlossenen Bauteil-Raum (SS, FBG), innenliegend umfassend zumindest einen Sender (TX) zum Senden eines Sende-Signals, zumindest einen steuerbaren Reflektor (RIS) zum Reflektieren von Signalen in zumindest eine konfigurierbare Reflexions-Richtung, zumindest einen Empfänger (RX) zum Empfangen der reflektierten Signale, und zumindest ein erstes Bauteil zum Reflektieren des Sende-Signals und/oder des reflektierten Signals während einer ersten Zustandsbestimmung, und zumindest ein zweites Bauteil zum Reflektieren des Sende-Signals und/oder des reflektierten Signals während einer zweiten Zustandsbestimmung, wobei folgende Schritte ausgeführt werden:
- Bestimmen eines ersten Zustands des Bauteil-Raums (SS, FBG), bei welchem nur das zumindest eine erste Bauteil im Bauteil-Raum (SS, FBG) angeordnet so ist, durch Senden eines Sende-Signals, Anwenden zumindest einer vorbestimmten Reflexions-Richtung durch den Reflektor (RIS), Reflektieren des Sende-Signals und/oder das reflektierte Signal und Empfangen der reflektierten Signale, und
- Bestimmen eines zweiten Zustands des Bauteil-Raums (SS, FBG), bei welchem das zumindest eine erste Bauteil und das zumindest eine zweite Bauteil im Bauteil-Raum (SS, FBG) angeordnet sind, durch Senden des Sende-Signals, Anwenden der zumindest einen vorbestimmten Reflexions-Richtung durch den Reflektor (RIS), Reflektieren des Sende-Signals und/oder des reflektierten Signals und Empfangen der reflektierten Signale, und
- Bestimmen der strukturellen Änderung im Bauteil-Raum (SS, FBG) aus dem Unterschied zwischen dem ersten und dem zweiten Zustand.

2. Verfahren nach dem vorhergehenden Anspruch, wobei die zumindest eine konfigurierbare Richtung des Reflektors (RIS) zumindest drei, bevorzugt fünf, besonders bevorzugt zehn Richtungen aufweist, welche während der Zustandsbestimmungen des Bauteil-Raums (SS, FBG) zeitlich sequenziell durch den Reflektor (RIS) konfiguriert werden.

3. System zum Erkennen einer strukturellen Änderung in einem geschlossenen Bauteil-Raum (SS, FBG), umfassend
- zumindest einen Sender (TX), welcher innerhalb des Bauteil-Raums (SS, FBG) angeordnet ist und dazu eingerichtet ist, Sende-Signale zu senden, und
- zumindest einen steuerbaren Reflektor (RIS), welcher innerhalb des Bauteil-Raums (SS, FBG) angeordnet ist und dazu eingerichtet ist, Signale in zumindest eine konfigurierbare Richtung zu reflektieren, und
- zumindest ein erstes Bauteil, welches innerhalb des Bauteil-Raums (SS, FBG) so angeordnet ist, dass das Sende-Signal und/oder das reflektierte Signal daran reflektiert wird, und
- zumindest einen Empfänger (RX), welcher innerhalb des Bauteil-Raums (SS, FBG) angeordnet ist und dazu eingerichtet ist, Signale zu empfangen,
und das System ferner dazu eingerichtet ist,
- einen ersten Zustand des Bauteil-Raums (SS, FBG), bei welchem nur das zumindest eine erste Bauteil im Bauteil-Raum (SS, FBG) angeordnet ist, durch Senden des Sende-Signals, Anwenden zumindest einer vorbestimmten Reflexions-Richtung durch den Reflektor (RIS) und Empfangen der reflektierten Signale, zu bestimmen, und
- einen zweiten Zustand des Bauteil-Raums (SS, FBG), bei welchem das zumindest eine erste Bauteil und das zumindest ein zweites Bauteil im Bauteil-Raum (SS, FBG) so angeordnet sind, um das Sende-Signal und/oder das reflektierte Signal zu reflektieren, durch Senden des Sende-Signals, Anwenden der zumindest einen vorbestimmten Richtung durch den Reflektor (RIS) und Empfangen der reflektierten Signale zu bestimmen, und
- aus dem Unterschied zwischen dem ersten und dem zweiten Zustand der strukturellen Änderung im Bauteil-Raum (SS, FBG) zu bestimmen.

4. System nach dem vorhergehenden Anspruch, wobei das zumindest eine zweite Bauteil durch jeweils ein abgetrenntes Teil des zumindest einen ersten Bauteil gebildet ist.

5. System nach Anspruch 3 oder 4, wobei das zumindest eine zweite Bauteil ein mechanisches oder elektrisches oder elektronisches Werkzeug (Z) umfasst

6. System nach einem der Ansprüche 3 bis 5, wobei der Bauteil-Raum (SS, FBG) ein Schaltschrank ist, und das zumindest eine erste Bauteil ein elektronisches Gerät (G1-G4) und/oder ein elektrisches Kabel (K1, K2, D1, D2) umfasst.

7. System nach einem der Ansprüche 3 bis 5, wobei der Bauteil-Raum (SS, FBG) eine elektronische Baugruppe ist, und das zumindest eine erste Bauteil ein elektronisches Halbleiter-Bauteil (BT1-BT3) umfasst.

8. System nach einem der vorhergehenden Ansprüche, wobei die zumindest eine konfigurierbare Richtung zumindest drei, bevorzugt fünf, besonders bevorzugt zehn Richtungen aufweist, welche während der Zustandsbestimmungen des Bauteil-Raums (SS, FBG) zeitlich sequenziell durch den Reflektor (RIS) konfigurierbar sind.

9. System nach einem der vorhergehenden Ansprüche, wobei der Bauteil-Raum (SS, FBG) zumindest teilweise aus einem elektrisch leitfähigen Material gebildet ist, bevorzugt zu mehr als 50%, besonders bevorzugt zu mehr als 75%, jeweils der innenliegenden Oberfläche des Bauteil-Raums (SS, FBG).
